# FASCICULE DE BREVET EUROPEEN

(11) **EP 3 526 065 B1**
(45) Date de publication et mention de la délivrance du brevet: **02.08.2023**
(21) Numéro de dépôt: 17794014.5
(22) Date de dépôt: 17.10.2017
(51) Int. Cl.: B60J 1/02, B32B 17/10

(54) **PARE-BRISE D'AIDE A LA CONDUITE**
WINDSCHUTZSCHEIBE FÜR FAHRHILFE
WINDSCREEN FOR DRIVING ASSISTANCE

(30) Priorité: 17.10.2016 FR 1660036
(43) Date de publication de la demande: 21.08.2019
(73) Titulaire: SAINT-GOBAIN GLASS FRANCE, 92400 Courbevoie (FR)
(72) Inventeur: KAPLAN, Benjamin, 52066 Aachen (DE); SCHMALBUCH, Klaus, 52062 Aachen (DE); DROSTE, Stefan, 52134 Herzogenrath (DE); EFFERTZ, Christian, 52080 Aachen (DE)
(74) Mandataire: Saint-Gobain Recherche
(86) Numéro de dépôt international: PCT/FR2017/052847
(87) Numéro de publication internationale: WO 2018/073528

(56) Documents cités:
- EP-A1- 2 120 025
- EP-A1- 2 120 025
- EP-A1- 2 390 141
- EP-A1- 2 390 141
- EP-A2- 0 934 851
- EP-A2- 0 934 851
- WO-A1-2016/143582
- WO-A1-2016/143582
- DE-A1- 10 333 978
- DE-A1- 10 333 978
- DE-A1-102008 014 089
- DE-A1-102008 014 089

## Description

L'invention se rapporte à un vitrage, en particulier un pare-brise, permettant la saisie de données d'images dans un véhicule automobile en association avec un système de caméra ADAS (Advanced Driver Assistance Systems). L'invention décrit également un dispositif combinant ledit vitrage (ledit pare-brise) et ladite caméra pour une telle visualisation d'informations.

Les vitrages pour véhicules et la technologie associée évoluent constamment, notamment pour améliorer la sécurité. Une importante innovation réside dans les systèmes d'aide à la conduite ou ADAS (Advanced Driver Assistance Systems). Selon le principe général, des caméras placées derrière le pare-brise permettent à ces ADAS d'assister le conducteur pendant la conduite. Un tel dispositif ADAS peut notamment avoir les fonctions suivantes, sans que la liste ci-après soit exhaustive :
- avertir le conducteur lorsque le véhicule quitte involontairement la bande de circulation,
- signaler un arrêt d'urgence,
- améliorer la vision de nuit,
- permettre une vue à 360 degrés via des écrans de contrôle visibles du conducteur,
- reconnaître les panneaux de signalisation installés au bord de la route,
- garantir une détection précise de la distance et des objets, selon un mode bi ou encore tridimensionnel (notamment par effet stéréoscopique, par exemple à l'aide d'une pluralité de caméras).

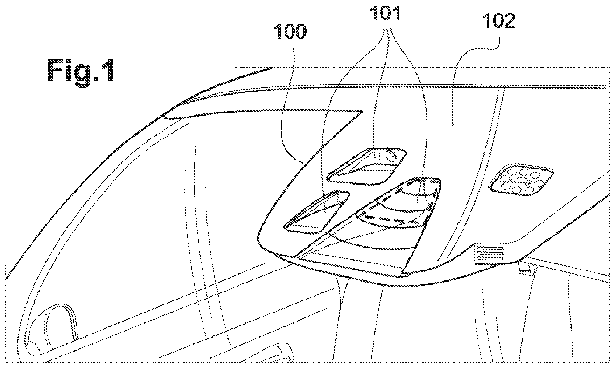

De la façon la plus classique, le dispositif comprend au moins une caméra disposée derrière le pare-brise du véhicule. Dans les versions actuelles de tels dispositifs, un problème d'encombrement se pose. En effet, la place disponible sur le vitrage avant d'un véhicule pour de tels dispositifs est très limitée car ils ne doivent pas gêner la vision du conducteur, pour des raisons évidentes de sécurité. Une telle zone 100, parfois nommée Y0 dans le domaine, se situe habituellement dans la partie centrale et supérieure du pare-brise comme indiqué sur la figure 1 ci-jointe. Dans cette zone 100, la ou les caméras sont orientées avec un certain angle vis-à-vis de la surface du pare-brise, En particulier, l'objectif et le capteur d'image (CCD ou CMOS) qui lui couplés, sont orientés directement vers la zone de saisie d'images, selon une direction proche de la parallèle au sol, c'est-à-dire seulement légèrement inclinée vers la route, comme illustré par les figures ci-jointes. Autrement dit, la caméra est orientée vers la route selon un angle faible et adapté pour remplir les fonctions précédentes.

Concrètement, au niveau du pare-brise, compte tenu de la taille de l'objectif, du capteur de la caméra et de son boitier, un champ de vision correcte accessible à chaque caméra nécessite donc que le faisceau extérieur collecté (ou plutôt l'ensemble des faisceaux collectés selon un angle solide prédéfini) traverse pour chacune desdites caméras une fenêtre spécifique 101 de forme trapézoïdale sur le pare-brise, tel qu'illustré par la figure 1 ci-jointe.

Etant donné que le pare-brise lui-même, dans la zone de capture d'images, présente un angle relativement faible par rapport à la route, la mise en oeuvre d'une caméra de taille réduite nécessite donc sur le pare-brise la disponibilité d'une fenêtre trapézoïdale 101 de relativement grande dimension, et d'autant plus étendue que l'angle solide à observer est important, comme illustré sur la figure 1 ci-jointe.

Une telle configuration implique en outre l'utilisation d'un revêtement noir 102, tel qu'une couche d'émail ou de laque noir, sur toute la surface du vitrage disposée en regard du dispositif incorporant la caméra ADAS, y compris son boîtier, de manière à cacher celui-ci.

En outre, si plusieurs caméras sont associées, par exemple pour assurer une pluralité de fonctions comme décrites précédemment, ou encore pour une restitution et/ou une analyse en mode tridimensionnel (stéréoscopique), il s'avère de plus nécessaire de séparer les unes des autres les différentes zones trapézoïdales correspondant à chaque caméra, comme illustré sur la figure 1. Dans un tel cas notamment, la surface imprimée noire 102 sur le vitrage peut prendre des dimensions très importantes, dans des proportions susceptibles de diminuer notablement le champ de vision global du conducteur à travers le pare-brise. Dans la plupart des réalisations actuelles intégrant plusieurs caméras ADAS, c'est presque sensiblement toute la surface du pare-brise dans sa partie centrale supérieure qui doit être recouverte d'une couche d'impression noire, comme illustré sur la figure 1 ci-jointe.

Un pare-brise feuilleté selon le préambule de la revendication 1 est divulgué dans le document WO 2016/143582 A1.

Le but de la présente invention est de proposer une solution permettant de résoudre les problèmes décrits précédemment et en particulier permettant de contourner les problèmes d'encombrement décrits précédemment, en réduisant en particulier la surface noire présente sur le pare-brise pour isoler ou masquer les caméras ADAS présentes à l'arrière du vitrage.

En particulier, le problème précédent a pu être résolu en modifiant l'orientation des optiques de la caméra de façon à faire basculer celle-ci d'un angle β vers la verticale.

Plus précisément, la présente invention se rapporte à un pare-brise feuilleté pour véhicule automobile, tel que décrit dans les revendications qui suivent.

Par le terme « sensiblement horizontalement », on entend à titre d'exemple que l'angle formé entre le sol et les rayons du faisceau lumineux est inférieur à 30° et en particulier est inférieur à 20°, voire même inférieur à 10°.

Par le terme « sensiblement parallèlement », on entend, à titre d'exemple que l'angle formé entre la surface interne du pare-brise et la surface de détection de la surface du détecteur CCD inférieur à 30°, et notamment est inférieure à 20° ou même est inférieur à 10°.

Certains modes de réalisations avantageux mais non limitatif de la présente invention sont décrits ci-après, qui peuvent bien entendu combinés entres eux le cas échéant :
- Le dispositif optique comprend depuis l'extérieur vers l'intérieur du vitrage, une première lentille convergente, une lentille divergente et une lentille convergente.
- Dans une réalisation dans laquelle ledit pare-brise est muni d'un trou traversant uniquement la feuille de verre extérieure, dans lequel est inséré ledit dispositif optique, le dispositif optique comprend depuis l'extérieur vers l'intérieur du vitrage, une lentille convergente et une lentille divergente. Avantageusement, une lentille convergente est collée sur la face arrière de la feuille de verre intérieure.
- Le dispositif optique comprend en outre une matière plastique d'indice de réfraction n₂ inférieur ou égale à n₁.
- Le dispositif optique comprend en outre une matière plastique d'indice de réfraction n₂ inférieur à n₁.
- Le dispositif optique comprend depuis l'extérieur vers l'intérieur du vitrage, une première lentille convergent, une lentille divergente une lentille convergente et optionnellement une matière plastique d'indice de réfraction n₂ inférieur à n₁ disposée entre lesdites lentilles.
- Ledit indice de réfraction de réfraction n₂ est inférieur à l'indice de réfraction n₁ d'au moins 0,05 et de préférence d'au moins 0,1.
- L'intercalaire est en PVB.
- L'intercalaire est en PVB, et le matériau compris dans le dispositif optique présente un indice de réfraction n₂ compris entre 1,31 et 1,43.
- Le matériau de la couche d'indice n₂ est choisi parmi les polymères d'uréthane acrylate aliphatiques, éventuellement fluorés.
- Ledit dispositif optique est disposé dans une zone supérieure centrale du vitrage.

L'invention se rapporte également à un dispositif de saisie d'images à travers un pare-brise, issues d'une zone de capture d'un rayonnement lumineux arrivant sensiblement horizontalement sur la face d'un pare-brise exposée à l'extérieur du véhicule, ledit dispositif étant caractérisé en ce qu'il comprend une caméra, en particulier une caméra ADAS, comprenant un capteur d'image et un pare-brise tel que décrit précédemment, et dans lequel la surface du capteur d'image de la caméra est disposée sensiblement parallèlement à la surface dudit pare-brise.

La figure 1 illustre une vue en perspective d'un dispositif de saisie d'images actuellement commercialisé, comme précédemment décrit.

La figure 2 schématise, en coupe sagittale, un pare-brise selon une première configuration selon l'invention, ainsi que le trajet d'un rayonnement lumineux depuis l'extérieur du véhicule jusqu'à l'objectif d'une caméra ADAS placée derrière le pare-brise.

La figure 3 schématise en coupe sagittale, un pare-brise selon une deuxième configuration selon l'invention, ainsi que le trajet d'un rayonnement lumineux depuis l'extérieur du véhicule jusqu'à l'objectif d'une caméra ADAS placée derrière le pare-brise.

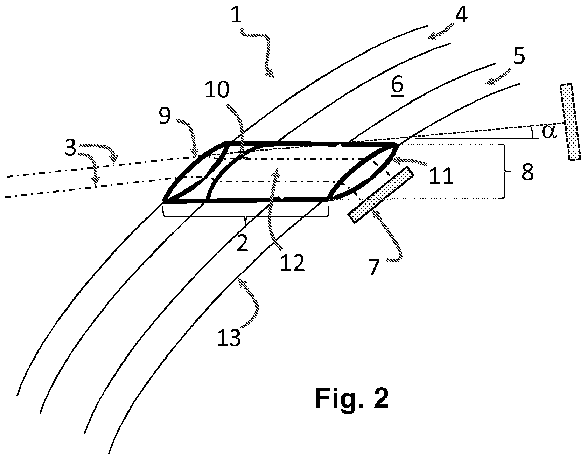

Plus particulièrement, la figure 2 illustre un mode de réalisation de la présente invention, de façon plus détaillée mais non limitative.

Sur cette figure, on a représenté un vitrage feuilleté suivant un plan de coupe sagittal. Un faisceau lumineux initial 3 arrivant de l'environnement extérieur du véhicule sur la face de la feuille de verre 4 la plus externe du pare-brise et notamment de la zone de la route qu'on cherche à observer par une caméra, schématisé par son seul capteur 7 sur la figure 2, disposée dans une partie supérieure du pare-brise 1. Ledit capteur 7 comprend préférentiellement une surface matricielle CCD (charge coupled device) ou CMOS (Complementary Metal Oxide Semiconductor).

Par faisceau lumineux, on entend au sens de la présente invention l'ensemble des rayons lumineux arrivant selon un certain angle solide et qu'on cherche à capturer via la caméra 7. Sur la figure 2, on a figuré, pour plus de clarté, ce rayonnement par uniquement deux rayons lumineux.

Comme illustré par la figure 2, le faisceau 3 de lumière extérieure au véhicule arrive avec un angle d'incidence α sur le pare-brise faible par rapport à l'horizontale, en principe inférieur à 30°, voire inférieur à 20°, ou même inférieur à 10°. L'installation d'une caméra directement à l'arrière du pare-brise 1 impose classiquement, pour la captation dudit faisceau, que l'axe d'orientation de la caméra présente donc lui-même un angle α faible par rapport à la route et un angle élevé par rapport à la perpendiculaire à la surface intérieure 13 du pare-brise, dans la zone d'installation de ladite caméra, comme figuré en traits pointillés sur la figure 2.

Comme indiqué précédemment en lien avec la figure 1, dans une telle configuration, la surface laquée ou émaillée noire 102 dessinée sur le vitrage pour dissimuler l'ensemble de l'installation peut prendre des dimensions très importantes, jusqu'à éventuellement diminuer notablement le champ de vision global du conducteur à travers le pare-brise lui-même.

Le vitrage 1 représenté sur la figure 2 est un pare-brise feuilleté classique comprenant une première feuille de verre 4 et une deuxième feuille de verre 5, les deux feuilles de verre étant liées l'une à l'autre par un intercalaire 6 en matière thermoplastique, le plus souvent en polyvinylbutyral (PVB). De façon classique et bien connue, le pare-brise est obtenu par feuilletage à chaud des éléments 4, 5 et 6. Sans sortir du cadre de l'invention, l'intercalaire peut bien entendu comprendre plusieurs feuillets en matière thermoplastique de natures différentes, par exemple de duretés différentes pour assurer une fonction acoustique, comme par exemple décrit dans la publication US 6,132,882, notamment une ensemble de feuillets de PVB de duretés différentes. De même l'une des feuilles de verres peut être amincie par rapport aux épaisseurs classiquement utilisées. L'intercalaire peut également selon l'invention présenter une forme en coin, notamment en vue d'une application HUD (Head Up Display pour visualisation tête haute). Egalement l'un des feuillets de l'intercalaire peut être teinté dans la masse.

Dans l'intercalaire 6, dans une zone du vitrage disposée dans la région de positionnement final recherché de la caméra, une découpe est effectuée dans le pare-brise, de façon à pratiquer un trou 8 de dimensions suffisantes et nécessaires pour y insérer un dispositif optique 2 selon l'invention, dont l'épaisseur est sensiblement identique à celle du pare-brise.

Le dispositif 2 décrit sur la figure 2 comprend un ensemble de lentilles convergentes et divergentes, sans qu'une telle réalisation ne puisse être considérée comme limitative de l'étendue de la présente invention. Les lentilles sont dimensionnées et espacées selon les techniques de l'art de telle façon que le rayonnement 3, initialement sensiblement horizontal comme décrit précédemment, soit dévié et converge via ledit dispositif optique vers la partie sensible du capteur 7, celui-ci pouvant ainsi être repositionné de telle manière que sa surface active soit disposé cette fois sensiblement parallèlement à la surface interne de la deuxième feuille de verre 5, dans la zone de captation de l'image. De cette manière, il devient possible de basculer l'ensemble de la caméra et par suite de minimiser à l'arrière du vitrage la place qu'occupe tous les éléments servant au traitement de l'image et leurs boitiers. Egalement, il est possible de rapprocher le capteur 7 de la caméra au plus près du vitrage, ce qui se traduit également par une diminution sensible de l'encombrement lié à sa mise en oeuvre.

Comme expliqué précédemment également, une telle configuration permet de cette manière de limiter très fortement les dimensions de la zone trapézoïdale traversée par le faisceau sur le pare-brise et donc au final la surface totale de la zone imprimée noire 102 sur le vitrage. A titre d'exemple, on a pu calculer qu'un basculement β de seulement 5° de la caméra permet de diminuer la surface de ladite zone trapézoïdale de plus de 50%. On a ainsi représenté sur la figure 1 en traits pleins la zone trapézoïdale selon la configuration actuelle et en traits pointillés la zone trapézoïdale dans une configuration conforme à la présente l'invention.

Selon l'invention, il devient donc possible de limiter fortement la surface de la zone imprimée noire sur le pare-brise ou alternativement de placer un nombre supérieur de caméras dans la zone accessible du pare-brise, notamment en vue d'une vision stéréoscopique ou encore pour augmenter les points de contrôle sur la route et/ou le nombre de fonctions telles que décrites précédemment.

Plus précisément, tel qu'illustré par la figure 2 par les traits pointillés qui figurent le trajet des rayons lumineux 3 dans le dispositif optique, le rayonnement incident est dévié par une première lentille convergente 9. Le faisceau ainsi dévié est ensuite redressé par une seconde lentille divergente 10 et avantageusement confiné dans le dispositif optique par un matériau thermoplastique 12 dont l'indice de réfraction n₂ est inférieur à celui du feuillet thermoplastique 6.

Ce matériau d'indice n₂ est plus particulièrement choisi parmi les matières plastiques présentant des propriétés d'adhésion aux surfaces de verre ou de plastiques.

En particulier, le matériau 12 est choisi avantageusement et préférentiellement de telle façon que son indice de réfraction n₂ soit significativement plus faible que celui du matériau constituant le feuillet intercalaire 6. Par significativement plus faible, on entend une différence d'indice d'au moins 0,05 et de préférence d'au moins 0,1.

En particulier et par exemple, si le matériau 6 est un thermoplastique du type PVB, dont l'indice de réfraction est de l'ordre de 1,48, le matériau choisi pour constituer le matériau d'indice n₂ peut avantageusement être choisi parmi les polymères acrylate, en particulier les polymères d'uréthane acrylate aliphatiques éventuellement fluorés, dont l'indice de réfraction peut varier entre 1,31 et 1,42 selon la formulation. De tels polymères adhésifs sont par exemple commercialisés par la société Nordland sous les références NOA 1315, NOA 132, NOA 1327, NOA 1328, NOA 133, NOA 13685, NOA 1375, NOA 138, NOA 142.

La portion de découpe 8 dans le pare-brise présente normalement des dimensions faibles, rapportée à la surface du pare-brise ou du vitrage.

La forme et les dimensions de la portion de découpe 8 sont également configurées selon les techniques de l'art de manière à collecter efficacement et sélectivement l'ensemble du rayonnement lumineux incident traversant le pare-brise, et issu d'une plage d'angle solide extérieure au véhicule et provenant de la zone en avant du véhicule que l'on cherche à capturer via la caméra.

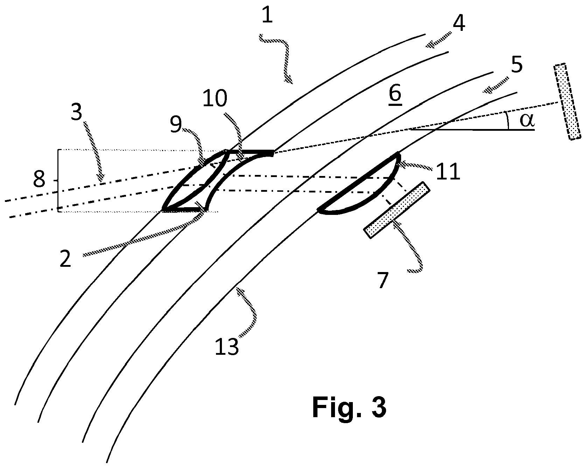

La figure 3 illustre un autre mode de réalisation de la présente invention, dans lequel le pare-brise est muni d'un trou 8 traversant cette fois-ci uniquement la feuille de verre extérieure 4, dans lequel est inséré ledit dispositif optique 2 qui comprend la combinaison d'une lentille convergente et d'une lentille divergente. Selon ce mode, la feuille de verre intérieure 5 n'est pas découpée et est traversée par le rayon lumineux dévié par le dispositif optique 2. Selon ce mode, une lentille convergente 11 est cette fois placée (collée) sur la face arrière 13 de la feuille de verre intérieure 5, pour dévier le faisceau, sensiblement sans déformation, vers le capteur 7 de la caméra.

## Revendications

1. Pare-brise feuilleté (1) pour véhicule automobile, comprenant deux feuilles de verre extérieure (4) et intérieure (5), liées entre elles par un intercalaire (6) constitué d'une matière thermoplastique d'indice de réfraction n₁, dans lequel ledit pare-brise est muni d'un trou (8) traversant au moins une desdites feuilles de verre, dans lequel ledit trou est comblé par un dispositif optique (2) adapté pour dévier un faisceau lumineux (3) arrivant sensiblement horizontalement sur la face du pare-brise exposée à l'extérieur du véhicule et le faire converger sensiblement sans déformation vers un dispositif de captation d'image (7) d'une caméra, tel qu'un détecteur CCD ou CMOS, disposé en regard de la face du pare-brise tournée vers l'habitacle du véhicule, ledit détecteur étant disposé sensiblement parallèlement à la surface (13) dudit pare-brise dans lequel ledit pare-brise est muni d'un trou (8) traversant lesdites feuilles de verre (4, 5) et ledit intercalaire ou uniquement la feuille de verre extérieure (4), dans lequel est inséré ledit dispositif optique et **caractérisé en ce que** le dispositif optique (2) comprend une combinaison de lentille(s) convergente(s) et de lentille(s) divergente(s).

2. Pare-brise feuilleté selon la revendication précédente, dans lequel le dispositif optique comprend depuis l'extérieur vers l'intérieur du vitrage, une première lentille convergente (9), une lentille divergente (10) et une lentille convergente (11).

3. Pare-brise feuilleté selon l'une des revendications précédentes, dans lequel le dispositif optique comprend en outre une matière plastique (12) d'indice de réfraction n₂ inférieur ou égale à n₁.

4. Pare-brise feuilleté selon l'une des revendications précédentes, dans lequel le dispositif optique comprend en outre une matière plastique d'indice de réfraction n₂ inférieur à n₁.

5. Pare-brise feuilleté selon l'une des revendications précédentes, dans lequel le dispositif optique comprend depuis l'extérieur vers l'intérieur du vitrage, une première lentille convergente (9), une lentille divergente (10) une lentille convergente (11) et une matière plastique (12) d'indice de réfraction n₂ inférieur à n₁ disposée entre lesdites lentilles.

6. Pare-brise feuilleté selon l'une des revendications 3 à 5, dans lequel l'indice de réfraction n₂ est inférieur à l'indice de réfraction n d'au moins 0,05 et de préférence d'au moins 0,1.

7. Pare-brise feuilleté selon l'une des revendications précédentes, dans lequel l'intercalaire (6) est en PVB, et dans lequel le matériau (12) compris dans le dispositif optique présente un indice de réfraction n₂ compris entre 1,31 et 1,43.

8. Pare-brise feuilleté selon l'une des revendications 4 à 7, dans lequel le matériau de la couche d'indice n₂ est choisi parmi les polymères d'uréthane acrylate aliphatiques, éventuellement fluorés.

9. Pare-brise feuilleté selon la revendication précédente, dans lequel le dispositif optique comprend depuis l'extérieur vers l'intérieur du vitrage, une lentille convergente (9) et une lentille divergente (10).

10. Pare-brise feuilleté selon l'une des revendications 8 ou 9, dans lequel une lentille convergente (11) est placée sur la face arrière de la feuille de verre intérieure (5).

11. Pare-brise feuilleté selon l'une des revendications précédentes, dans lequel ledit dispositif optique est disposé dans une zone supérieure centrale du vitrage.

12. Dispositif de saisie d'images à travers un pare-brise, issues d'une zone de capture d'un rayonnement lumineux arrivant sensiblement horizontalement sur la face d'un pare-brise exposée à l'extérieur du véhicule, ledit dispositif étant **caractérisé en ce qu'**il comprend :
- une caméra, en particulier une caméra ADAS, comprenant un capteur d'image (7),
- un pare-brise (1) tel que décrit selon l'une des revendications précédentes, dans lequel la surface du capteur d'image (7) de la caméra est disposée sensiblement parallèlement à la surface dudit pare-brise.

## Patentansprüche

1. Verbundwindschutzscheibe (1) für ein Kraftfahrzeug, umfassend zwei Glasscheiben, eine äußere (4) und eine innere (5), die untereinander durch eine Zwischenlage (6) verbunden sind, die aus einem thermoplastischen Material mit Brechungsindex n₁ besteht, wobei die Windschutzscheibe mit einem Loch (8) versehen ist, das durch mindestens eine der Glasscheiben verläuft, wobei das Loch durch eine optische Vorrichtung (2) ausgefüllt ist, die zum Ablenken eines Lichtbündels (3) angepasst ist, das im Wesentlichen horizontal auf die Seite der Windschutzscheibe auftrifft, die der Außenseite des Fahrzeugs ausgesetzt ist und es im Wesentlichen ohne Verzerrung in Richtung einer Bildaufnahmevorrichtung (7) einer Kamera konvergiert, wie beispielsweise ein CCD- oder CMOS-Detektor, der gegenüber der Seite der Windschutzscheibe angeordnet ist, die in Richtung des Fahrzeuginnenraum gewandt ist, wobei der Detektor im Wesentlichen parallel zu der Oberfläche (13) der Windschutzscheibe angeordnet ist, wobei die Windschutzscheibe mit einem Loch (8) versehen ist, das durch die Glasscheiben (4, 5) und die Zwischenlage oder nur die äußere Glasscheibe (4) verläuft, in das die optische Vorrichtung eingefügt ist, und **dadurch gekennzeichnet, dass** die optische Vorrichtung (2) eine Kombination aus (einer) Sammellinse(n) und (einer) Zerstreuungslinse(n) umfasst.

2. Verbundwindschutzscheibe nach dem vorstehenden Anspruch, wobei die optische Vorrichtung von der Außenseite in Richtung der Innenseite der Verglasung eine erste Sammellinse (9), eine Zerstreuungslinse (10) und eine Sammellinse (11) umfasst.

3. Verbundwindschutzscheibe nach einem der vorstehenden Ansprüche, wobei die optische Vorrichtung ferner ein Kunststoffmaterial (12) mit Brechungsindex n₂ umfasst, der kleiner als oder gleich n₁ ist.

4. Verbundwindschutzscheibe nach einem der vorstehenden Ansprüche, wobei die optische Vorrichtung ferner ein Kunststoffmaterial mit Brechungsindex n₂ umfasst, der kleiner als n₁ ist.

5. Verbundwindschutzscheibe nach einem der vorstehenden Ansprüche, wobei die optische Vorrichtung von der Außenseite in Richtung der Innenseite der Verglasung eine erste Sammellinse (9), eine Zerstreuungslinse (10), eine Sammellinse (11) und ein Kunststoffmaterial (12) mit Brechungsindex n₂, der kleiner als n₁ ist, das zwischen den Linsen angeordnet ist, umfasst.

6. Verbundwindschutzscheibe nach einem der Ansprüche 3 bis 5, wobei der Brechungsindex n₂ kleiner als der Brechungsindex n- von mindestens 0,05 und vorzugsweise mindestens 0,1 ist.

7. Verbundwindschutzscheibe nach einem der vorstehenden Ansprüche, wobei die Zwischenlage (6) aus PVB ist und wobei das Material (12), das in der optischen Vorrichtung enthalten ist, einen Brechungsindex n₂ zwischen 1,31 und 1,43 aufweist.

8. Verbundwindschutzscheibe nach einem der Ansprüche 4 bis 7, wobei das Material der Schicht mit Index n₂ aus aliphatischen, optional fluorierten Urethanacrylatpolymeren ausgewählt ist.

9. Verbundwindschutzscheibe nach dem vorstehenden Anspruch, wobei die optische Vorrichtung von der Außenseite in Richtung der Innenseite der Verglasung einer Sammellinse (9) und eine Zerstreuungslinse (10) umfasst.

10. Verbundwindschutzscheibe nach einem der Ansprüche 8 oder 9, wobei eine Sammellinse (11) auf der Rückseite der inneren Glasscheibe (5) platziert ist.

11. Verbundwindschutzscheibe nach einem der vorstehenden Ansprüche, wobei die optische Vorrichtung in einer mittleren oberen Zone der Verglasung angeordnet ist.

12. Vorrichtung zum Eingeben von Bildern durch eine Windschutzscheibe, die aus einem Aufnahmebereich von Lichtstrahlung, die im Wesentlichen horizontal auf der Seite einer Windschutzscheibe auftrifft, die der Außenseite des Fahrzeugs ausgesetzt ist, wobei die Vorrichtung **dadurch gekennzeichnet ist, dass** sie umfasst:
- eine Kamera, insbesondere eine ADAS-Kamera, umfassend einen Bildsensor (7),
- eine Windschutzscheibe (1) nach einem der vorstehenden Ansprüche, wobei die Oberfläche des Bildsensors (7) der Kamera im Wesentlichen parallel zu der Oberfläche der Windschutzscheibe angeordnet ist.

## Claims

1. A laminated motor-vehicle windshield (1) comprising two glass sheets, an exterior glass sheet (4) and an interior glass sheet (5), which sheets are joined together by an interlayer (6) made of a thermoplastic of refractive index n₁, wherein said windshield is equipped with a through-hole (8) that passes through at least one of said glass sheets and wherein said hole is filled with an optical device (2) that is suitable for deviating a light beam (3) incident substantially horizontally on that face of the windshield which is exposed to the exterior of the vehicle and for making it converge, substantially without deformation, on an image-capturing device (7) of a camera, such as a CCD or CMOS detector, placed facing that face of the windshield which is turned toward the passenger compartment of the vehicle, said detector being arranged substantially parallelly to the surface (13) of said windshield, wherein said windshield is equipped with a through-hole (8) that passes through said glass sheets (4, 5) and said interlayer or only the exterior glass sheet (4) and **characterized in that** the optical device (2) comprises a combination of one or more convergent lenses and one or more divergent lenses.

2. The laminated windshield as claimed in the preceding claim, wherein the optical device comprises, from the exterior to the interior of the glazing, a first convergent lens (9) a divergent lens (10) and a convergent lens (11).

3. The laminated windshield as claimed in one of the preceding claims, wherein the optical device furthermore comprises a plastic (12) of refractive index n₂ lower than or equal to n₁.

4. The laminated windshield as claimed in one of the preceding claims, wherein the optical device furthermore comprises a plastic of refractive index n₂ lower than n₁.

5. The laminated windshield as claimed in one of the preceding claims, wherein the optical device comprises, from the exterior to the interior of the glazing, a first convergent lens (9), a divergent lens (10) a convergent lens (11) and a plastic (12) of refractive index n₂ lower than n₁ placed between said lenses.

6. The laminated windshield as claimed in one of the claims 3 to 5, wherein the refractive index n2 is lower than the refractive index n1 by at least 0.05 and preferably at least 0.1.

7. The laminated windshield as claimed in one of the preceding claims, wherein the interlayer (6) is made of PVB, and wherein the plastic (12) comprised in the optical device has a refractive index n₂ comprised between 1.31 and 1.43.

8. The laminated windshield as claimed in one of claims 4 to 7, wherein the plastic of the layer of index n₂ is chosen from optionally fluorinated, aliphatic urethane acrylate polymers.

9. The laminated windshield as claimed in the preceding claim, wherein the optical device comprises, from the exterior to the interior of the glazing, a convergent lens (9) and a divergent lens (10).

10. The laminated windshield as claimed in either of claims 8 or 9, wherein a convergent lens (11) is placed on the back face of the interior glass sheet (5).

11. The laminated windshield as claimed in one of the preceding claims, wherein said optical device is located in a central upper zone of the glazing.

12. A device for capturing, through a windshield, images issued from a zone of capture of light radiation incident substantially horizontally on the that face of a windshield which is exposed to the exterior of the vehicle, said device being **characterized in that** it comprises:
- a camera, in particular an ADAS camera, comprising an image sensor (7); and
- a windshield (1) such as described according to one of the preceding claims, wherein the surface of the image sensor (7) of the camera is arranged substantially parallelly to the surface of said windshield.
